(19) **Europäisches Patentamt**
**European Patent Office**
**Office européen des brevets**

(11) **EP 4 306 816 B1**

(12) **EUROPEAN PATENT SPECIFICATION**

(45) Date of publication and mention
of the grant of the patent:
**11.02.2026 Bulletin 2026/07**

(21) Application number: **23183198.3**

(22) Date of filing: **04.07.2023**

(51) International Patent Classification (IPC):
*F16C 33/78* (2006.01)     *F16C 33/76* (2006.01)
*F16C 23/08* (2006.01)     *F16C 35/063* (2006.01)

(52) Cooperative Patent Classification (CPC):
**F16C 33/783; F16C 33/768; F16C 33/7856;**
F16C 23/084; F16C 35/063

(54) **BEARING UNIT WITH ROLLING BODIES**

LAGEREINHEIT MIT WÄLZKÖRPERN

UNITÉ DE PALIER AVEC CORPS DE ROULEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.07.2022 IT 202200014854**

(43) Date of publication of application:
**17.01.2024 Bulletin 2024/03**

(73) Proprietor: **Aktiebolaget SKF**
**415 50 Göteborg (SE)**

(72) Inventors:
• **D'Amico, Giorgia**
**10135 Torino (IT)**
• **Cognolato, Gianni Alvise**
**10028 Trofarello (IT)**
• **Foti, Claudio**
**14019 Villanova d asti (IT)**

(74) Representative: **Kohl, Thomas**
**SKF GmbH**
**Gunnar-Wester-Strasse 12**
**97421 Schweinfurt (DE)**

(56) References cited:
**IT-A1- TO 930 707    US-A- 4 428 629**
**US-B2- 9 581 201**

**Description**

Technical field

The present invention relates to a bearing unit with rolling bodies, having a sealing device. Such a bearing unit is suitable in particular for use in the food and beverage industry.

Prior art

Bearing units having rolling elements or bodies which, as is known, are used to allow relative movement between one component or group and another component or group, are known. The bearing unit generally has a first component, for example a radially outer ring, and a second component, for example a radially inner ring. As is known, the radially inner ring is often rotatable while the radially outer ring is stationary, whereas in other applications the outer ring rotates and the inner ring is stationary. In any case, in roller bearing units, the rotation of one ring with respect to the other is made possible by a plurality of rolling elements positioned between the cylindrical surface of one component and the cylindrical surface of the second component, usually referred to as raceways. The rolling elements may be balls, cylindrical or conical rollers, needle rollers and similar rolling elements.

It is also known practice for bearing units to have suitable sealing devices to protect against external contaminants and to create a seal with respect to lubricant. Typically, the sealing devices are made up of a shaped shield mounted by interference in suitable seats in the rings of the bearing unit, for example the radially outer ring. The shaped shield has an elastomer coating with one or more sealing lips and a protrusion which, in use, is inserted by interference, therefore deformably, in the seat of the radially outer ring. The sealing lips may, in use, make frictional contact with other components of the bearing unit, for example with the radially inner ring, which is rotatable. The sealing lips may also be in a "guttering" arrangement, in other words axially external and substantially parallel to one another, so as to create "labyrinth" seals, for example, with the casing containing the bearing unit. Such sealing devices must be very efficient both from a functional point of view and in terms of reliability, throughout the entire life of the bearing unit. Such a bearing and sealing arrangement is known from US 9 581 201 B2.

One of the drawbacks of known solutions is the procedure for assembling the sealing device. To be specific, when the sealing device is inserted in the seat in the radially outer ring, the elastomer protrusion is highly compressed and, not having the space necessary to adapt properly to the seat, gives rise to high tension forces that risk causing the sealing device to come out of the seat in the outer ring. In particular, it is difficult to implement a sealing device according to the prior art in the automatic bearing unit assembly process as solid anchoring of the sealing device cannot be obtained.

Brief description of the invention

It is an aim of the present invention to produce a bearing unit with rolling bodies which does not have the above drawbacks.

In particular, the bearing unit comprises a sealing device having a new anchoring system for optimizing the automatic assembly process on the production line.

The present invention provides a bearing unit with rolling bodies having the features set out in the attached claims.

Brief description of the drawings

The invention will now be described with reference to the attached drawings, which show some non-limiting embodiments of the bearing unit, in which:

- Figure 1 shows, in cross section, a bearing unit with rolling bodies according to a preferred embodiment of the present invention,

- Figure 2 shows, on an enlarged scale and in section, a sealing device of the bearing unit of Figure 1,

- Figure 3 shows, schematically and on an enlarged scale, a detail of Figure 1,

- Figure 4 shows, schematically and on an enlarged scale, an element of the sealing device of Figure 2, and

- Figure 5 shows, schematically and on an enlarged scale, an alternative form of the element of Figure 4.

Detailed description

An embodiment of a bearing unit with rolling bodies according to the present invention is described purely by way of example.

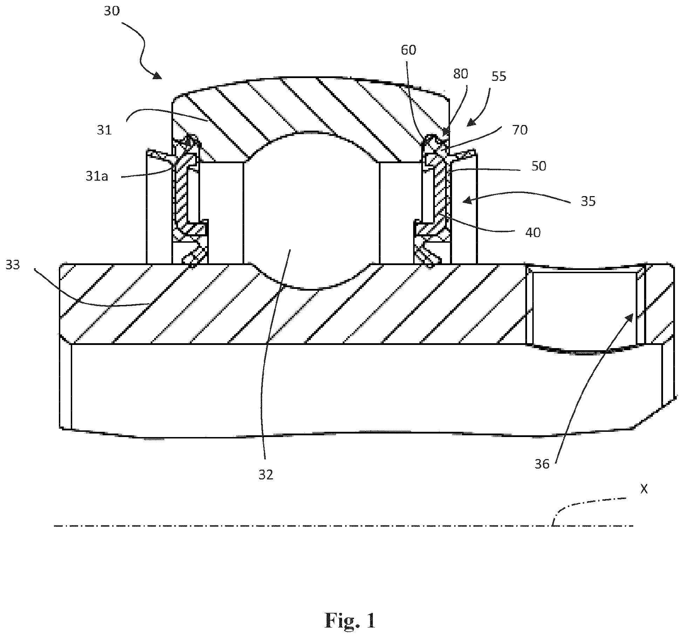

With reference in particular to Figure 1, the bearing unit 30 for use, preferably but not exclusively, in the food and beverage industry, comprises:

- a radially outer ring 31, preferably stationary,
- a radially inner ring 33, preferably rotatable about a central axis of rotation X of the bearing unit 30 and having at least one through hole 36 for receiving a device for attachment (known and therefore not shown in the figures, for example a pair of grub screws or plugs) of the bearing unit 30, specifically the radially inner ring 33, to a machine shaft,
- a row of rolling elements 32 interposed between the radially outer ring 31 and the radially inner ring 33.

Throughout the present description and in the claims, terms and expressions indicating positions and orientations, such as "radial" and "axial", are to be understood with reference to the central axis of rotation X of the bearing unit 30.

To simplify the drawings, the reference sign 32 will designate both individual rolling elements and the row of rolling elements. Again for the sake of simplicity, the term "rolling element" will be used to identify any rolling element, namely balls, rollers, conical rollers, needle rollers and the like.

The bearing unit 30 also has sealing devices 35 for sealing off the bearing unit from the external environment.

The sealing device 35 is interposed between the radially inner ring 33 and the radially outer ring 31. In use, the sealing device 35 is stably anchored in a seat 31a in the radially outer ring 31. The seat 31a is radially internal with respect to the radially outer ring 31 and has a toroidal shape.

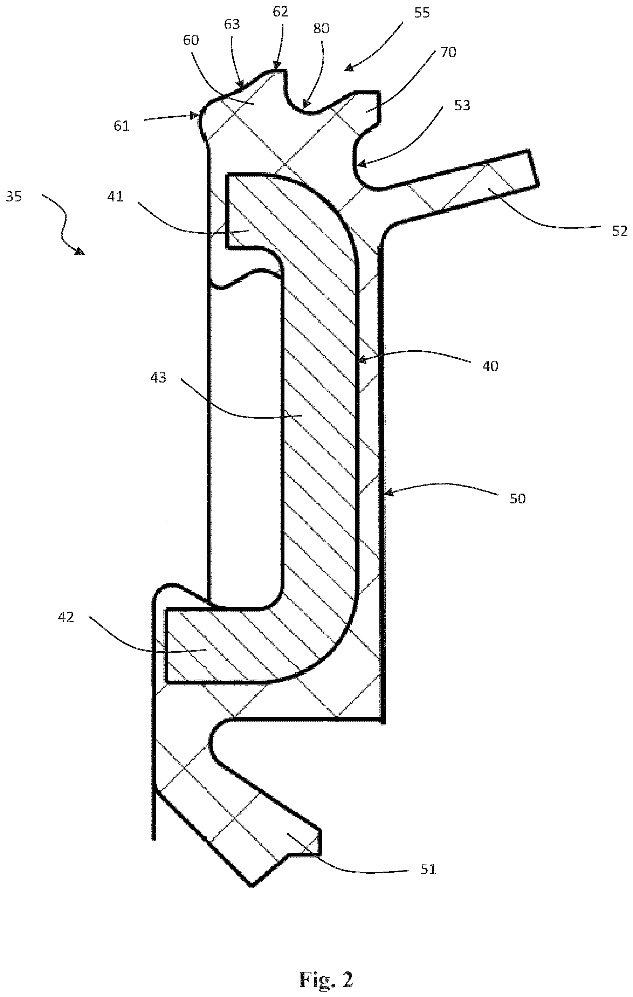

With reference to Figure 2, the sealing device 35 comprises a shaped shield 40 in metallic material and an elastomer coating 50 overmolded on the shaped shield 40.

In particular, the shaped shield 40 comprises a first radially outer cylindrical portion 41 coaxial with the axis X, a second radially inner cylindrical portion 42, again coaxial with the axis X, and a flange portion 43 for connecting the first and second cylindrical portions, which extends radially inwards and transversely to the axis X from said first cylindrical portion 41.

The elastomer coating 50 comprises:

- a contacting lip 51, radially internal, which in use creates a seal by frictional contact with the radially inner ring 33,
- at least one non-contacting lip 52. Figure 2 shows a solution with a single non-contacting lip. However, solutions with several non-contacting lips, in a "guttering" arrangement, in other words axially external and substantially parallel to one another so as to create "labyrinth" seals with a casing (known and therefore not shown in the figures) containing the bearing unit 30 are also known and may be used in the present invention, and
- an anchorage 55, radially external and rigidly secured to the cylindrical portion 41 of the shaped shield 40, making it possible to stably attach the sealing device 35 to the seat 31a in the radially outer ring 31.

The present invention lies in the new anchorage 55, which has been designed with the following aims:

- the anchorage has a shape which is more flexible than known solutions, for reducing the tension forces linked to the deformation of the elastomeric material,
- the anchorage has a shape which interfaces better with the seat 31a in the radially outer ring 31,

- the anchorage has a shape which improves assembly in the seat 31a in the radially outer ring 31.

These aims are achieved with an anchorage 55 which has:

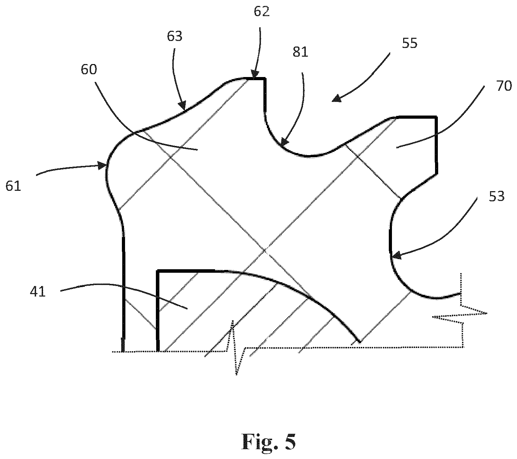

- a first anchoring lip 60, radially external and axially internal, configured in use to be stably inserted in the seat 31a of the radially external ring 31,
- a second anchoring lip 70, radially external and axially external, configured in use to improve the position in the seat 31a of the sealing device 35 and the protection from external contamination. To be specific, the second lip 70, once placed in its operational anchoring position, becomes for all effects and purposes a static sealing lip on the radially outer ring 31. It also creates a "dynamic seal" by interacting with a groove 53, below the second lip 70, and with the non-contacting lip 52. This affords better protection against the ingress of contaminants both owing to the direct contact itself and owing to the curved shape of the groove 53 which tends to repel contaminants heading for the bearing unit 30,
- a connecting surface 80, 81, radially external, between the first anchoring lip 60 and the second anchoring lip 70, configured to reduce compression during the assembly process, facilitating assembly of the sealing device in the seat in the radially outer ring. According to a first embodiment of the invention, the connecting surface 80 is a toroidal surface. In an alternative embodiment, shown in Figure 5, the connecting surface 81 is a cylindrical surface.

More specifically, the first anchoring lip 60 has a first protrusion 61, axially and radially internal, and a second protrusion 62, radially external and axially external to the first protrusion 61, which are connected to one another by a conical surface 63 which is slightly concave, and which has the purpose of reducing the tension on the anchorage 55 during assembly of the sealing device 35.

The seat 31a in the radially outer ring 31 in turn has a conical surface 311, axially internal, a circular surface 312, axially external to the conical surface 311, and a substantially toroidal surface 313 at the centre, which is connected both to the conical surface 311 and to the circular surface 312. The radially outer ring 31 also has an edge 31b, axially external and radially internal to the seat 31a.

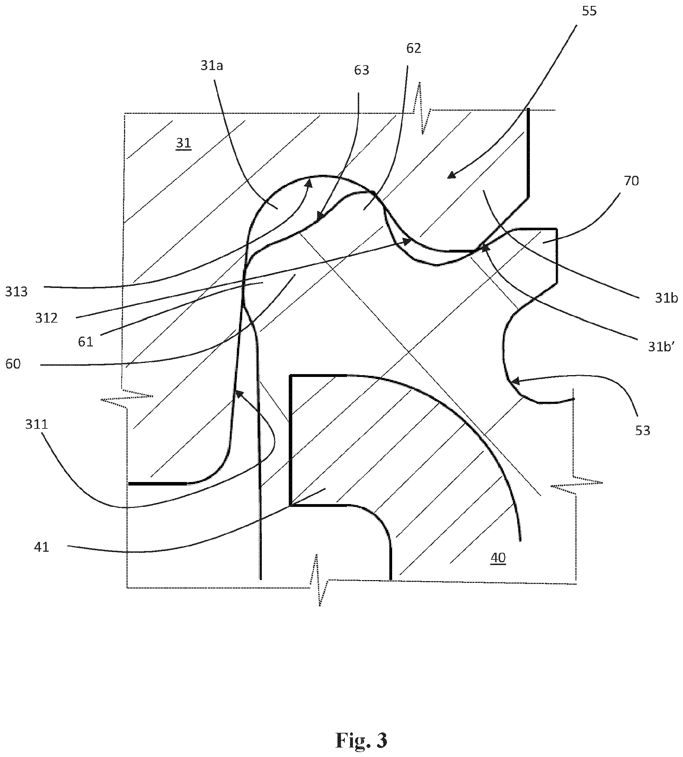

The sealing device 35 is assembled in the seat 31a by inserting, in the axially internal direction, the first anchoring lip 60, which deforms (specifically, its second protrusion 62 deforms in particular) so as to slide against and pass beyond the edge 31b of the radially outer ring 31. Next, the first anchoring lip 60 enters the seat 31a, relaxing and taking up a position, shown schematically in Figure 3, affording stable anchoring by virtue of the reaction forces exchanged, respectively, between the first protrusion 61 and the conical surface 311 of the seat 31a and between the second protrusion 62 and the circular surface 312 of the seat 31a.

The double-lip design of the anchorage 55 has two simultaneous functions: the first anchoring lip 60, axially internal, enters the seat 31a in the radially outer ring 31 "gently" and stays rigidly attached to said seat; the second anchoring lip 70, which is external, is basically a second protection both for stabilizing the assembly process through the contact with a radially internal conical surface 31b' of the edge 31b of the radially outer ring 31, and for creating a contacting seal with the outer ring against external contaminants.

Therefore, this new shape of the anchorage 55, in particular of the first anchoring lip 60, stabilizes the position of the sealing device 35 and the forces within the seat 31a in the radially outer ring 31. Furthermore, also by virtue of the conical surface 63, the first anchoring lip 60, and therefore the entire anchorage 55, is not subjected to high tension forces that could cause it to come out of the corresponding seat 31a.

It will be understood that, in order to ensure the highest efficiency of this new anchorage 55, it is advantageous to combine this new solution with optimized dimensions.

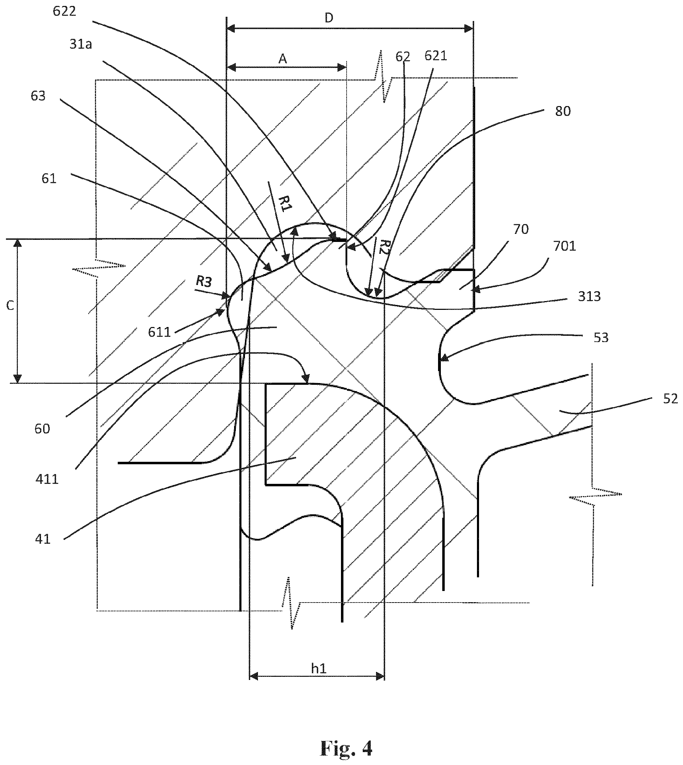

With reference to Figure 4, as h1 defines the axial width of the seat 31a and in particular of its toroidal central surface 313, the fundamental dimensions of the anchorage may be related directly or indirectly thereto.

The axial width A of the first anchoring lip 60, in other words the axial distance from the axially inner edge 611 of the first protrusion 61 to the axially outer edge 621 of the second protrusion 62, is between

$$h1 < A < 1.1 \times h1,$$

wherein higher values would excessively stress the anchorage 55, while lower values would not guarantee sufficient stability of the anchorage in the seat.

The axial width D of the entire anchorage 55, in other words the axial distance from the axially inner edge 611 of the first protrusion 61 to the axially outer edge 701 of the second anchoring lip 70, may be between

$$2.0 \times A < D < 2.1 \times A$$

wherein higher values would not guarantee a sufficient seal between the second anchoring lip 70 and the conical surface 31b' of the edge 31b of the radially outer ring 31, while lower values would excessively stress the second anchoring lip 70.

The radial width C of the second anchoring lip 70, that is the radial distance between the radially outer surface 411 of the first cylindrical portion 41 of the shaped shield 40 and a cylindrical surface 622, radially external, of the second protrusion 62, may be between

$$1.2 \times A < C < 1.25 \times A.$$

In practice, this makes it possible to restrict as far as possible the value of the thickness of elastomer of the first anchoring lip 60 and, therefore, the radial height of the entire sealing device 35 for better insertion in the seat in the radially outer ring. Higher values than the selected range would make assembly of the sealing device more difficult, while lower values would not guarantee optimum production of the two anchoring lips 60, 70 for reasons of the production process.

The radius of curvature R1 of the slightly concave conical surface 63 may be between

$$1.4 \times A < R1 < 1.45 \times A$$

in order to guarantee proper flexibility of the first anchoring lip 60.

The radius of curvature R2 of the connecting surface 80, radially external, between the first anchoring lip 60 and the second anchoring lip 70 may be between 0.15 mm and 1 mm in order to guarantee proper compression of the first anchoring lip 60 towards the connecting surface 80, 81 in such a way as to facilitate insertion of the profile of the anchorage 55 in the seat 31a, during the assembly process.

Lastly, the radius R3 of the axially inner edge 611 of the first protrusion 61 may be between 0.15 mm and 1.5 mm, in order to guarantee correct positioning of the entire sealing device 35 in the seat 31a by compressing the two protrusions 61, 62 in such a way as to balance the reaction forces exchanged, respectively, between the first protrusion 61 and the conical surface 311 of the seat 31a and between the second protrusion 62 and the circular surface 312 of the seat 31a.

To sum up, the solution proposed by the sealing device with an optimized anchorage offers the following advantages:

- improves automatic assembly of the sealing device in the bearing unit, preventing it from coming out during application, and also preventing the elastomeric material from being squashed on the edge of the outer ring with consequent tearing of the sealing device in the assembly phase,
- generally improves the process for assembling the sealing device, preventing it from rotating relative to the radially outer ring,
- does not change the current process for assembling the bearing unit, introducing further assembly steps,
- does not change the sealing device as regards the sealing lips, since the changes proposed only affect the anchoring area.

In addition to the embodiments of the invention as described above, it is also to be understood that said embodiments are solely exemplary. On the contrary, although the above description enables those skilled in

**Claims**

1. Bearing unit (30) comprising:

- a radially outer ring (31), stationary,
- a radially inner ring (33), rotatable with respect to an axis of rotation (X),
- a row of rolling bodies (32) interposed between the radially outer ring (31) and the radially inner ring (33),
- a sealing device (35), which is interposed between the radially inner ring (33) and the radially outer ring (31), is stably anchored, in use, in a seat (31a) of the radially outer ring (31) and comprises, in turn, a shaped shield (40) in metallic material, and an elastomer coating (50) overmolded on the shaped shield (40) and provided with an anchorage (55), radially external, wherein the anchorage (55) includes:

- a first anchoring lip (60), radially external and axially internal, configured in use to be stably inserted in the seat (31a) of the radially external ring (31),
- a second anchoring lip (70), radially external and axially external, configured in use to improve the position in the seat (31a) of the sealing device (35) and the protection from external contamination,
- a connecting surface (80, 81), radially external, between the first anchoring lip (60) and the second anchoring lip (70), configured to reduce the compression of the anchorage (55) during the assembly process,

wherein the first anchoring lip (60) comprises a first protrusion (61), axially and radially internal, and a second protrusion (62), axially and radially external to the first protrusion (61), both protrusions being connected among them by a conical surface (63) with a slightly concave course, the bearing unit being **characterized in that** the axial distance (A) from an axially inner edge (611) of the first protrusion (61) to an axially outer edge (621) of the second protrusion (62) is comprised between

$$h1 < A < 1.1 \times h1,$$

where h1 is the axial width of the seat (31a).

2. Bearing unit (30) according to claim 1, wherein the second anchoring lip (70) is configured to realize a contacting seal with a conical surface (31b'), radially internal of an edge (31b), axially external and radially internal, of the radially outer ring (31).

3. Bearing unit (30) according to any of the preceding claims, wherein the connecting surface (80) is a toroidal surface or the connecting surface (81) is a cylindrical surface.

4. Bearing unit (30) according to claim 1, wherein the axial distance (D) from the axially inner edge (611) of the first protrusion (61) to an axially outer edge (701) of the second anchoring lip (70) is between

$$2.0 \times A < D < 2.1 \times A.$$

5. Bearing unit (30) according to claim 1, wherein the radial distance (C) between a radially outer surface (411) of a first cylindrical portion (41) of the shaped shield (40) and a cylindrical surface (622), radially external, of the second protrusion (62) is between

$$1.2 \times A < C < 1.25 \times A.$$

6. Bearing unit (30) according to claim 1, wherein the radius of curvature (R1) of the conical surface (63) is comprised between

$$1.4 \times A < R1 < 1.45 \times A.$$

7. Bearing unit (30) according to any of the preceding claims, wherein the radius of curvature (R2) of the connecting surface (80) between the first anchoring lip (60) and the second anchoring lip (70) is between 0.15 mm and 1 mm.

8. Bearing unit (30) according to claim 1, wherein the radius (R3) of the axially inner edge (611) of the first protrusion (61) is between 0.15 mm and 1.5 mm.

**Patentansprüche**

1. Lagereinheit (30), die Folgendes umfasst:

- einen radial äußeren Ring (31), der stationär ist,
- einen radial inneren Ring (33), der in Bezug auf eine Drehachse (X) drehbar ist,
- eine Reihe von Wälzkörpern (32), die zwischen dem radial äußeren Ring (31) und dem radial inneren Ring (33) angeordnet sind,
- eine Dichtungsvorrichtung (35), die zwischen dem radial inneren Ring (33) und dem radial äußeren Ring (31) angeordnet ist, im Gebrauch stabil in einem Sitz (31a) des radial äußeren Rings (31) verankert ist und wiederum eine geformte Abschirmung (40) aus metallischem Material und eine Elastomerbeschichtung (50) umfasst, die auf der geformten Abschirmung (40) umspritzt und mit einer radial externen Verankerung (55) versehen ist,
wobei die Verankerung (55) Folgendes umfasst:

- eine radial externe und axial interne erste Verankerungslippe (60), die im Gebrauch dazu ausgelegt ist, stabil in den Sitz (31a) des radial externen Rings (31) eingesetzt zu sein,
- eine radial externe und axial externe zweite Verankerungslippe (70), die im Gebrauch dazu ausgelegt ist, die Position in dem Sitz (31a) der Dichtungsvorrichtung (35) und den Schutz vor externer Verunreinigung zu verbessern,
- eine radial externe Verbindungsfläche (80, 81) zwischen der ersten Verankerungslippe (60) und der zweiten Verankerungslippe (70), die dazu ausgelegt ist, die Kompression der Verankerung (55) während des Montageprozesses zu reduzieren,

wobei die erste Verankerungslippe (60) einen axial und radial internen ersten Vorsprung (61) und einen zu dem ersten Vorsprung (61) axial und radial externen zweiten Vorsprung (62) umfasst, wobei beide Vorsprünge durch eine konische Fläche (63) mit einem leicht konkaven Verlauf untereinander verbunden sind,
wobei die Lagereinheit **dadurch gekennzeichnet ist, dass** der axiale Abstand (A) von einer axial inneren Kante (611) des ersten Vorsprungs (61) zu einer axial äußeren Kante (621) des zweiten Vorsprungs (62) zwischen Folgendem liegt

$$h1 < A < 1,1xh1,$$

wobei h1 die axiale Breite des Sitzes (31a) ist.

2. Lagereinheit (30) nach Anspruch 1, wobei die zweite Verankerungslippe (70) dazu ausgelegt ist, eine Kontaktdichtung mit einer radial internen konischen Fläche (31b') einer Kante (31b) axial extern und radial intern des radial äußeren Rings (31) herzustellen.

3. Lagereinheit (30) nach einem der vorhergehenden Ansprüche, wobei die Verbindungsfläche (80) eine torusförmige Fläche ist oder die Verbindungsfläche (81) eine zylindrische Fläche ist.

4. Lagereinheit (30) nach Anspruch 1, wobei der axiale Abstand (D) von der axial inneren Kante (611) des ersten Vorsprungs (61) zu einer axial äußeren Kante (701) der zweiten Verankerungslippe (70) zwischen Folgendem liegt

$$2,0xA < D < 2,1xA.$$

5. Lagereinheit (30) nach Anspruch 1, wobei der radiale Abstand (C) zwischen einer radial äußeren Fläche (411) eines ersten zylindrischen Abschnitts (41) der geformten Abschirmung (40) und einer radial externen zylindrischen Fläche (622) des zweiten Vorsprungs (62) zwischen Folgendem liegt

$$1,2xA < C < 1,25xA.$$

6. Lagereinheit (30) nach Anspruch 1, wobei der Krümmungsradius (R1) der konischen Fläche (63) zwischen Folgendem liegt

$$1,4xA < R1 < 1,45xA.$$

7. Lagereinheit (30) nach einem der vorhergehenden Ansprüche, wobei der Krümmungsradius (R2) der Verbindungsfläche (80) zwischen der ersten Verankerungslippe (60) und der zweiten Verankerungslippe (70) zwischen 0,15 mm und 1 mm liegt.

8. Lagereinheit (30) nach Anspruch 1, wobei der Radius (R3) der axial inneren Kante (611) des ersten Vorsprungs (61) zwischen 0,15 mm und 1,5 mm liegt.

**Revendications**

1. Unité de palier (30) comprenant :

- une bague radialement extérieure (31), fixe,
- une bague radialement intérieure (33), rotative par rapport à un axe de rotation (X),
- une rangée de corps roulants (32) interposés entre la bague radialement extérieure (31) et la bague radialement intérieure (33),
- un dispositif d'étanchéité (35), qui est interposé entre la bague radialement intérieure (33) et la bague radialement extérieure (31), est assujetti de manière stable, durant l'utilisation, dans un siège (31a) de la bague radialement extérieure (31) et comprend, pour sa part, un flasque profilé (40) en matériau métallique, et un revêtement élastomère (50) surmoulé sur le flasque profilé (40) et muni d'une partie d'assujettissement (55), radialement extérieure,
la partie d'assujettissement (55) comprenant :

- une première lèvre d'assujettissement (60), radialement extérieure et axialement intérieure, conçue pour être insérée de manière stable, durant l'utilisation, dans le siège (31a) de la bague radialement extérieure (31),
- une seconde lèvre d'ancrage (70), radialement extérieure et axialement extérieure, conçue pour améliorer, durant l'utilisation, la position dans le siège (31a) du dispositif d'étanchéité (35) et la protection contre les pollutions extérieures,
- une surface de liaison (80, 81), radialement extérieure, entre la première lèvre d'assujettissement (60) et la seconde lèvre d'assujettissement (70), conçue pour réduire la compression de la partie d'assujettissement (55) pendant le processus d'assemblage,

la première lèvre d'assujettissement (60) comprenant une première saillie (61), axialement et radialement intérieure, et une seconde saillie (62), axialement et radialement extérieure à la première saillie (61), les deux saillies étant reliées entre elles par une surface conique (63) de course légèrement concave,
l'unité palier étant **caractérisée en ce que** la distance axiale (A) d'un bord axialement intérieur (611) de la première saillie (61) à un bord axialement extérieur (621) de la seconde saillie (62) est comprise entre

$$h1 < A < 1,1 \times h1,$$

h1 étant la largeur axiale du siège (31a).

2. Unité de palier (30) selon la revendication 1, la seconde lèvre d'assujettissement (70) étant conçue pour réaliser un joint d'étanchéité en contact avec une surface conique (31b'), radialement intérieure d'un bord (31b) axialement extérieur et radialement intérieur, de la bague radialement extérieure (31).

3. Unité de palier (30) selon l'une quelconque des revendications précédentes, la surface de liaison (80) étant une surface toroïdale ou la surface de liaison (81) étant une surface cylindrique.

4. Unité de palier (30) selon la revendication 1, la distance axiale (d) du bord axialement intérieur (611) de la première saillie (61) à un bord axialement extérieur (701) de la seconde lèvre d'assujettissement (70) étant comprise entre

$$2,0 \times A < D < 2,1 \times A.$$

5. Unité de palier (30) selon la revendication 1, la distance radiale (C) entre une surface radialement extérieure (411) d'une première partie cylindrique (41) du flasque profilé (40) et une surface cylindrique (622), radialement extérieure, de la seconde saillie (62) étant comprise entre

$$1,2 \times A < C < 1,25 \times A.$$

6. Unité de palier (30) selon la revendication 1, le rayon de courbure (R1) de la surface conique (63) étant compris entre

$$1,4 \times A < R1 < 1,45 \times A.$$

7. Unité de palier (30) selon l'une quelconque des revendications précédentes, le rayon de courbure (R2) de la surface de liaison (80) entre la première lèvre d'assujettissement (60) et le second rebord d'assujettissement (70) étant compris entre 0,15 mm et 1 mm.

8. Unité de palier (30) selon la revendication 1, le rayon (R3) du bord axialement intérieur (611) de la première saillie (61) étant compris entre 0,15 mm et 1,5 mm.

**Fig. 1**

**Fig. 2**

Fig. 3

Fig. 4

Fig. 5

**EP 4 306 816 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9581201 B2